# EUROPÄISCHE PATENTANMELDUNG

(11) **EP 1 120 494 A2**
(43) Veröffentlichungstag der Anmeldung: **01.08.2001**
(21) Anmeldenummer: 00122832.9
(22) Anmeldetag: 20.10.2000
(51) Int. Cl.: E01B 35/06

(54) **Vorrichtung zur Messung der Fahrflächenrauhigkeit von Schienen im Fahrbetrieb**

(30) Priorität: 28.01.2000 DE 10003675
(71) Anmelder: Fraunhofer-Gesellschaft zur Förderung der angewandten Forschung e.V., 80636 München (DE)
(72) Erfinder: Dambacher, Martin, 79423 Heitersheim (DE); Dimopoulos, Nikolaos, 79331 Heimbach (DE)
(74) Vertreter: RACKETTE Partnerschaft Patentanwälte

(57) **Zusammenfassung**

Bei einer Vorrichtung zur Messung der Fahrflächenrauhigkeit von Schienen (5) im Fahrbetrieb sind ein optisch arbeitender Abstandsmeßkopf (12) sowie ein Beschleunigungssensor (13), mit dem verhältnismäßig niederfrequente vertikale Beschleunigungen des Abstandsmeßkopfes (12) erfaßbar sind, vorgesehen. Das Ausgangssignal des Beschleunigungssensors (13) ist in einer zweistufigen Integrationseinheit (29, 30) in ein Positionsänderungssignal umwandelbar und zusammen mit einem Abstandssignal des Abstandsmeßkopfes (12) in einem Summiermodul (31) als Summenabstandssignal verknüpfbar. Das Summenabstandssignal ist mit einem Fouriertransformationsmodul (32) in einen Frequenzraum fouriertransformierbar. Damit sind die Frequenzkomponenten aus verhältnismäßig langsamen Bewegungen des Abstandsmeßkopfes (12) sowie aufgrund der Rauhigkeit der Fahrfläche (14) separiert.

## Beschreibung

Die Erfindung betrifft eine Vorrichtung zur Messung der Fahrflächenrauhigkeit von Schienen im Fahrbetrieb mit einem eine Strahlungsquelle und einen Strahlungsdetektor umfassenden Abstandsmeßkopf, wobei mit der Strahlungsquelle die betreffende Fahrfläche mit elektromagnetischer Strahlung beaufschlagbar ist und mit dem Strahlungsdetektor von der betreffenden Fahrfläche zurückgeworfene Strahlung detektierbar ist, und mit einer an den Abstandsmeßkopf angeschlossenen Auswerteeinheit, mit der aus der durch den Strahlungsdetektor erfaßten Strahlung die durch Wellenlängen und Rauhtiefen charakterisierte Rauhigkeit von Fahrflächen bestimmbar ist.

Eine derartige Vorrichtung ist aus der Internet-Seite http://www.atlas.de/dtsch/simul/prof_2.htm, verfügbar am 31. August 1999, bekannt. Die vorbekannte Vorrichtung verfügt über einen Abstandsmeßkopf, der eine Strahlungsquelle und einen Strahlungsdetektor umfaßt. Mit der Strahlungsquelle ist eine Fahrfläche einer Schiene mit elektromagnetischer Strahlung beaufschlagbar. Der Strahlungsdetektor ist dazu eingerichtet, von der betreffenden Fahrfläche zurückgeworfene Strahlung zu detektieren. Der Abstandsmeßkopf ist an eine Auswerteeinheit angeschlossen, mit der aus der durch den Strahlungsdetektor erfaßten Strahlung die Wellenlängen und Rauhtiefen als charakteristische Größen für die Rauhigkeit von Fahrflächen bestimmbar ist. Zwar sind bei der vorbekannten Vorrichtung im Fahrbetrieb mit Meßgeschwindigkeiten bis zu 200 Kilometer pro Stunde als Riffel und Wellen ausgebildete Rauhigkeiten der Fahrfläche detektierbar, allerdings ist nicht offenbart, wie gegenüber der Wellenlänge der Riffel und Wellen verhältnismäßig niederfrequente vertikale Bewegungen des Abstandsmeßkopfes aufgrund beispielsweise von Federungsvorgängen des Waggonrahmens eliminiert werden.

Weiterhin ist bekannt, die Fahrfläche einer Schiene mit einem mechanischen, auf der Fahrfläche aufsetzenden Meßkopf abzutasten und die durch die Rauhigkeit der Fahrfläche hervorgerufe Vertikalbewegung des Meßkopfes zu messen. Diese Vorgehensweise ist jedoch auf verhältnismäßig niedrige Geschwindigkeiten beschränkt und liefert lediglich bei verhältnismäßig großen Wellenlängen von Riffeln zufriedenstellende Ergebnisse.

Aus dem Artikel "Automatische Prüfeinrichtung bei der Herstellung von Schienen" von J. Geitner und E. Jericho, erschienen in Eisenbahntechnische Rundschau (ETR) Heft 3, 1994, Seiten 143 bis 152, ist bekannt, bei der Herstellung von Schienen die Fahrflächen mit einer Anzahl von in Längsrichtung der Schiene angeordneten Kameras nach dem Wandersehnenprinzip auf Ebenheit zu untersuchen.

Der Erfindung liegt die Aufgabe zugrunde, eine Vorrichtung der eingangs genannten Art anzugeben, mit der im Fahrbetrieb auch bei verhältnismäßig hohen Geschwindigkeiten eine präzise Klassifizierung der Rauhigkeit geschaffen ist.

Diese Aufgabe wird bei einer Vorrichtung der eingangs genannten Art erfindungsgemäß dadurch gelöst, dass ein Beschleunigungssensor vorgesehen ist, der starr mit dem Abstandsmeßkopf verbunden sowie zur zeitabhängigen Messung von Beschleunigungskomponenten rechtwinklig zu der betreffenden Fahrfläche als Beschleunigungssignal eingerichtet ist, dass der Beschleunigungssensor an eine Integrationsstufe angeschlossen ist, mit der das Beschleunigungssignal zweimal nach der Zeit zur Generierung eines Positionsänderungssignals integrierbar ist, dass der Abstandsmeßkopf zur Generierung eines wegabhängigen Abstandssignals eingerichtet ist, das dem Abstand des Abstandsmeßkopfes zur betreffenden Fahrfläche entspricht, dass ein Summiermodul vorgesehen ist, in dem das Positionsänderungssignal und das Abstandssignal zu einem Summenabstandssignal verknüpfbar sind, und dass dem Summiermodul ein Fouriertransformationsmodul nachgeordnet ist, mit dem die Fourierkomponenten des Summenabstandssignals bestimmbar sind.

Dadurch, dass ein Beschleunigungssensor mit nachgeordneter Integrationseinheit vorgesehen ist, läßt sich eine aufgrund von niederfrequenten Federungsvorgängen verhältnismäßig langsame Relativbewegung des Abstandsmeßkopfes vertikal zu der Fahrfläche als erstes Abstandssignal unabhängig von dem zweiten Abstandssignal erfassen, das sowohl diese langsame Relativbewegung als auch verhältnismäßig hochfrequente, von der Rauhigkeit der Fahrfläche stammenden Komponenten umfaßt. Durch die Verknüpfung des ersten Abstandssignals und des zweiten Abstandssignals in dem Summiermodul als Summenabstandssignal sowie der anschließenden Fouriertransformation des Summenabstandssignals lassen sich aus dem zweiten Abstandssignal die in der Regel niederfrequenten Komponenten beispielsweise aus Federungsvorgängen eliminieren.

Im Hinblick auf eine Ausrichtung in Querrichtung ist bei einer Ausgestaltung zweckmäßigerweise eine Horizontalverstelleinheit vorgesehen, mit der der Abstandsmeßkopf quer zu den Schienen verschiebbar ist.

Eine Weiterbildung der vorgenannten Ausgestaltung weist eine Spurmeßeinheit auf, mit der der Abstandsmeßkopf so ausrichtbar ist, dass die Strahlung im wesentlichen mittig auf die betreffende Fahrfläche trifft. Dadurch ist eine permanente Ausrichtung des Abstandsmeßkopfes im wesentlichen mittig zu der Fahrfläche geschaffen.

Bei einer weiteren Ausgestaltung ist zu Justagezwecken zweckmäßigerweise eine Vertikalverstelleinheit vorgesehen, mit der der Abstandsmeßkopf senkrecht zu der betreffenden Fahrfläche verschiebbar ist.

Bei einer vorteilhaften Weiterbildung der letztgenannten Ausgestaltung ist ein Regelmodul vorgesehen, mit dem der Abstandsmeßkopf wenigstens innerhalb einer Variationsbreite um einen Sollabstand von der Fahrfläche positionierbar ist. Dadurch ist sichergestellt, dass der Abstandsmeßkopf ständig im vertikalen Meßbereich positioniert ist.

Es ist weiterhin zweckmäßig, dass dem Fouriertransformationsmodul das erste Abstandssignal direkt einspeisbar ist. Alternativ oder zusätzlich ist weiterhin vorteilhaft, dass dem Fouriertransformationsmodul das zweite Abstandssignal direkt einspeisbar ist. Dadurch lassen sich die Frequenzkomponenten des Summenabstandssignals eindeutiger klassifizieren.

Weitere zweckmäßige Ausgestaltungen der Erfindung sind Gegenstand der Unteransprüche sowie der nachfolgenden Beschreibung eines Ausführungsbeispiels unter Bezug auf die Figuren der Zeichnung. Es zeigen:
- Fig. 1: in einer teilgeschnittenen Draufsicht ein Drehgestell eines Waggonrahmens mit zwei im Bereich der Räder angeordneten erfindungsgemäßen Vorrichtungen,
- Fig. 2: in einer Seitenansicht den mechanischen Aufbau der beispielhaften erfindungsgemäßen Vorrichtung gemäß Fig. 1,
- Fig. 3: in einem Blockschaltbild den funktionalen Aufbau der erfindungsgemäßen Vorrichtung gemäß Fig. 2 und
- Fig. 4 bis Fig. 6: in grafischen Darstellungen Ausgangssignale eines Fouriertransformationsmoduls der Vorrichtung gemäß Fig. 3.

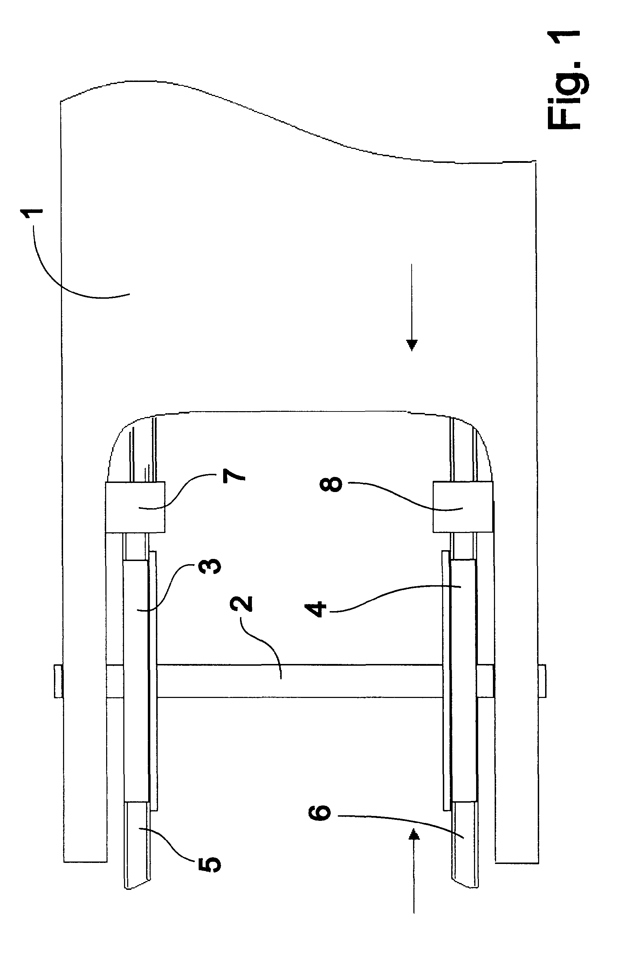

Fig. 1 zeigt in einer Draufsicht ein Drehgestell 1 eines Waggonrahmens, an dem über eine Radachse 2 ein erstes Rad 3 und ein zweites Rad 4 drehbar gelagert sind. Die Räder 3, 4 rollen auf Schienen 5, 6, deren Fahrflächenrauhigkeit bestimmt werden soll. Zu diesem Zweck sind im Bereich der Räder 3, 4 jeweils in einem Gehäuse 7, 8 untergebrachte erfindungsgemäße Vorrichtungen vorgesehen.

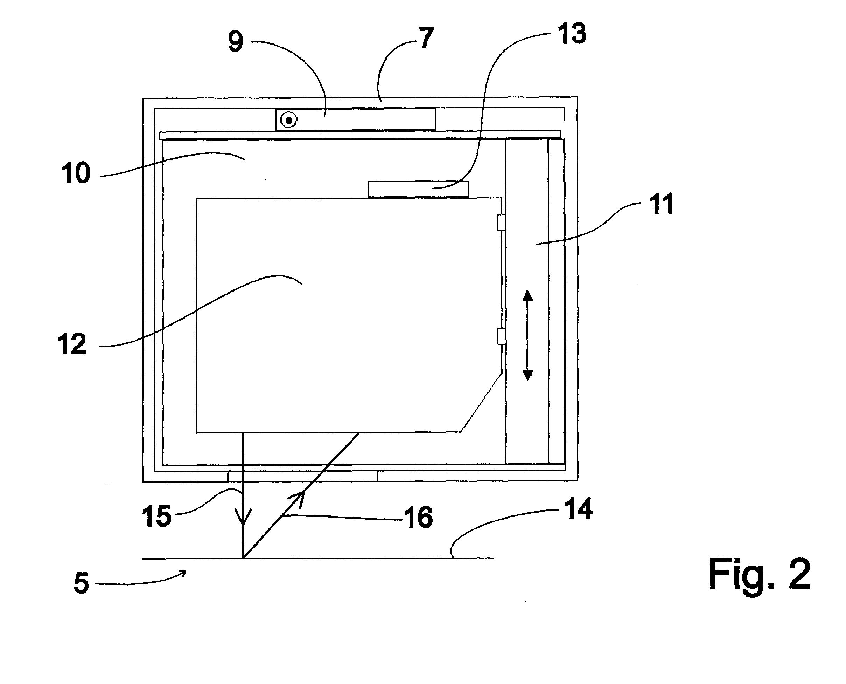

Fig. 2 zeigt in einer Seitenansicht den mechanischen Aufbau einer beispielhaften erfindungsgemäßen Vorrichtung, die in dem Gehäuse 7 untergebracht ist. Die Vorrichtung gemäß Fig. 2 verfügt über eine mit dem Gehäuse 7 verbundene Horizontalverstelleinheit 9, an der mit einem Schenkel ein Montagewinkel 10 befestigt ist. Der Montagewinkel 10 ist mit der Horizontalverstelleinheit 9 in einer Richtung, bei bestimmungsgemäßer Befestigung an dem Drehgestell 1 in horizontaler Richtung, verschiebbar.

An dem anderen Schenkel des Montagewinkels 10 ist eine Vertikalverstelleinheit 11 angebracht, an der wiederum ein Abstandsmeßkopf 12 befestigt ist. Der Abstandsmeßkopf 12 ist mit der Vertikalverstelleinheit 11 bei bestimmungsgemäßer Befestigung in vertikaler Richtung versetzbar. An dem Abstandsmeßkopf 12 ist ein Beschleunigungssensor 13 angebracht, mit dem auf den Abstandsmeßkopf 12 ausgeübte Beschleunigungen in vertikaler Richtung als Beschleunigungssignal detektierbar sind, welche von in der Regel verhältnismäßig langsamen und damit niederfrequenten Bewegungen des Abstandsmeßkopfes 12 in Bezug auf die Schiene 5 beispielsweise aufgrund von Eintauchbewegungen bei Federungsvorgängen herrühren.

Der Abstandsmeßkopf 12 verfügt über eine Strahlungsquelle, vorzugsweise einen Laser, mit dem durch ein Fenster in dem Gehäuse 7 die Fahrfläche 14 der Schiene 5 mit elektromagnetischer Strahlung 15 beaufschlagbar ist. Von der Fahrfläche 14 rückgeworfene, ebenfalls durch das Fenster durchtretende elektromagnetische Strahlung 16 ist mit einem Strahlungsdetektor des Abstandsmeßkopfs 12 detektierbar. Mit dem Abstandsmeßkopf 12 ist in an sich bekannter Weise beispielsweise durch Triangulationstechniken der Abstand zu der Fahrfläche 14 mit wenigstens einer der Rauhigkeit entsprechenden Weg- und Amplitudenauflösung bestimmbar.

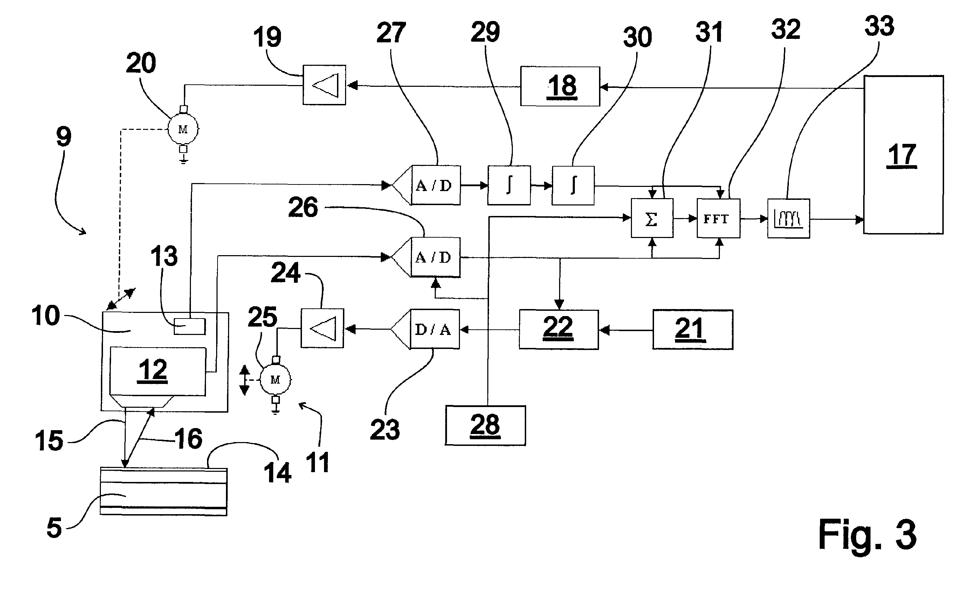

Fig. 3 zeigt in einem Blockschaubild den funktionalen Aufbau der erfindungsgemäßen Vorrichtung gemäß Fig. 2. Die Vorrichtung gemäß Fig. 3 weist eine Zentraleinheit 17 auf, die über Ein/Ausgabemittel wie eine Tastatur beziehungsweise einen Bildschirm sowie ein zentrales Datenverarbeitungsmodul verfügt. Die Zentraleinheit 17 ist an eine Spurmeßeinheit 18 angeschlossen, mit der über einen ersten Steuersignalwandler 19 ein Verstellmotor 20 der Horizontalverstelleinheit 9 so ansteuerbar ist, dass die von der Strahlungsquelle des Abstandsmeßkopfes 12 emittierte elektromagnetische Strahlung 15 die Fahrfläche 14 der Schiene 5 im wesentlichen mittig beaufschlagt.

Weiterhin verfügt die Vorrichtung gemäß Fig. 3 über einen Sollhöhengeber 21, der ein einer Sollhöhe entsprechendes Sollsignal für ein Regelmodul 22 liefert. Das Regelmodul 22 ist über einen Digital/Analogwandler 23 sowie einen zweiten Steuersignalwandler 24 an einen Verstellmotor 25 der Vertikalverstelleinheit 11 angeschlossen. Der Abstandsmeßkopf 12 ist über einen ersten Analog/Digitalwandler 26 an das Regelmodul 22 angeschlossen, dem somit als Istsignal der tatsächliche Abstand des Abstandsmeßkopfes 12 von der Oberfläche der Fahrfläche 14 einspeisbar ist. Mit dem Regelmodul 22 sind dem Verstellmotor 25 der Vertikalverstelleinheit 11 Regelsignale mit einer gegenüber der Rauhigkeit der Fahrfläche 14 großen Mittelungszeit zur Einhaltung eines mittleren Abstandes zu der Fahrfläche 14 innerhalb einer gewissen Variationsbreite um die Sollhöhe einspeisbar.

Der Beschleunigungssensor 13 ist an einen mit einer konstanten Frequenz getakteten zweiten Analog/Digitalwandler 27 angeschlossen, mit dem das Beschleunigungssignal digitalisierbar ist. Dem ersten Analog/Digitalwandler 26 ist zur Synchronisation ein einer bestimmten Wegstrecke entsprechendes Taktsignal aus einem Weggeber 28 einspeisbar.

Das Beschleunigungswerten entsprechende Ausgangssignal des zweiten Analog/Digitalwandlers 27 ist einem ersten Integrationsmodul 29 einer Integrationseinheit einspeisbar, mit dem eine erste Integration der Beschleunigungswerte nach der Zeit durchführbar ist. Das Geschwindigkeitssignalen entsprechende Ausgangssignal des ersten Integrationsmoduls 29 ist einem zweiten Integrationsmodul 30 der Integrationseinheit einspeisbar, mit dem zur Gewinnung eines Positionsänderungssignals eine zweite Integration des Geschwindigkeiten entsprechenden Ausgangssignals des ersten Integrationsmoduls 29 nach der Zeit durchführbar ist.

Die Ausgangssignale des zweiten Integrationsmoduls 30 sowie des ersten Analog/Digitalwandlers 26 sind einem von dem einer bestimmten Wegstrecke entsprechenden Taktsignal aus dem Weggeber 30 angesteuerten Summiermodul 31 sowie einem Fouriertransformationsmodul 32 einspeisbar. Mit dem Summiermodul 31 sind das Positionsänderungssignal aus der Integrationseinheit sowie das Abstandssignal aus dem ersten Analog/Digitalwandler 26 zu einem Summenabstandssignal additiv verknüpfbar. Das Summiermodul 31 ist ebenfalls an das Fouriertransformationsmodul 32 angeschlossen, mit dem die eingespeisten zeitabhängigen beziehungsweise aufgrund der Taktung durch den Weggeber 28 letzlich wegabhängigen Abstandssignale sowie das Summenabstandssignal in den Frequenzraum fouriertransformierbar sind. Das Fouriertransformationsmodul 32 steht mit einem Auswertemodul 33 in Verbindung, mit dem für vorbestimmte Wellenlängenbereiche mittlere spektrale Dichten der fouriertransformierten Positionsänderungssignale, Abstandssignale und Summenabstandssignale bestimmbar und dem Datenverarbeitungsmodul der Zentraleinheit 17 zur weiteren Verarbeitung einspeisbar sind.

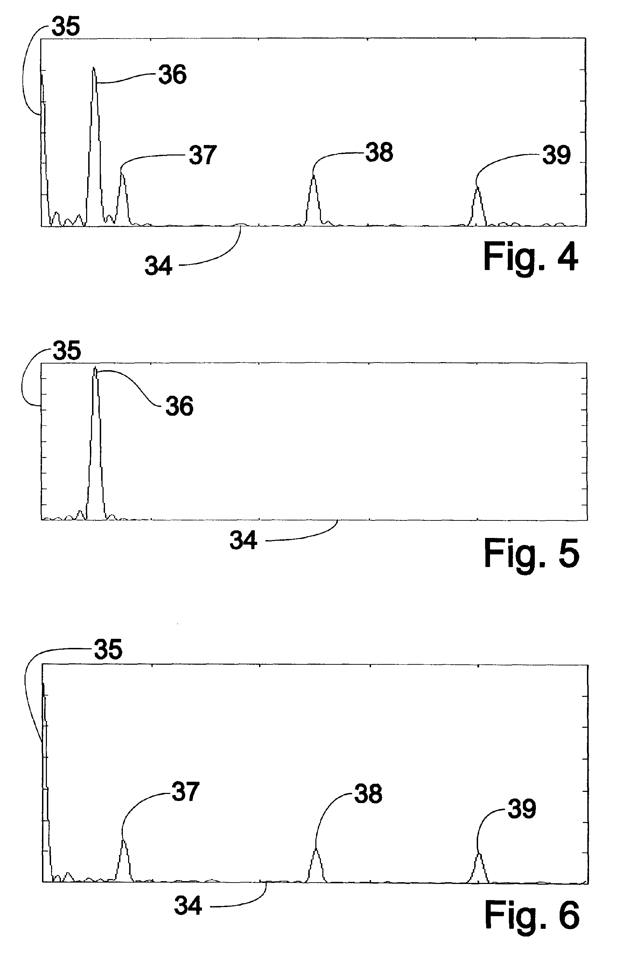

Fig. 4 bis Fig. 6 zeigen in einer grafischen Darstellung die Ausgangssignale des Fouriertransformationsmoduls 32. Fig. 4 zeigt das fouriertransformierte Ausgangssignal des Abstandsmeßkopfes 12, Fig. 5 das fouriertransformierte Ausgangssignal des Beschleunigungssensors 13 und Fig. 6 das fouriertransformierte Summenabstandssignal des Summiermoduls 31 jeweils in willkürlichen Einheiten, wobei auf den Abszissen 34 die Frequenz und auf den Ordinaten 35 die Amplituden der jeweiligen Fouriertransformierten abgetragen sind. Aus Fig. 4 bis Fig. 6 ist ersichtlich, dass das intensive, auf verhältnismäßig langsame Bewegung des Abstandsmeßkopfes 12 relativ zu der Fahrfläche 14 der Schiene 5 zurückzuführende Signal 36 des Beschleunigungssensors 13 in Fig. 5 bei der Summierung durch das Summiermodul 31 in der resultierenden Fouriertransformierten gemäß Fig. 6 eliminiert ist, so dass die verhältnismäßig intensiven, von Null verschiedenen Ausgangssignale 37, 38, 39 eindeutig als Rauhigkeiten der Fahrfläche 14 mit typischen Weglängen und Rauhtiefen zugeordneten Frequenzen beziehungsweise Amplituden klassifizierbar sind.

## Patentansprüche

1. Vorrichtung zur Messung der Fahrflächenrauhigkeit von Schienen (5, 6) im Fahrbetrieb mit einem eine Strahlungsquelle und einen Strahlungsdetektor umfassenden Abstandsmeßkopf, wobei mit der Strahlungsquelle die betreffende Fahrfläche (14) mit elektromagnetischer Strahlung (15) beaufschlagbar ist und mit dem Strahlungsdetektor von der betreffenden Fahrfläche (14) zurückgeworfene Strahlung (16) detektierbar ist, und mit einer an den Abstandsmeßkopf angeschlossenen Auswerteeinheit, mit der aus der durch den Strahlungsdetektor erfaßten Strahlung die durch Wellenlängen und Rauhtiefen charakterisierte Rauhigkeit von Fahrflächen (14) bestimmbar ist, **dadurch gekennzeichnet**, dass ein Beschleunigungssensor (13) vorgesehen ist, der starr mit dem Abstandsmeßkopf (12) verbunden sowie zur zeitabhängigen Messung von Beschleunigungskomponenten rechtwinklig zu der betreffenden Fahrfläche (14) als Beschleunigungssignal eingerichtet ist, dass der Beschleunigungssensor (13) an eine Integrationsstufe (29, 30) angeschlossen ist, mit der das Beschleunigungssignal zweimal nach der Zeit zur Generierung eines Positionsänderungssignals integrierbar ist, dass der Abstandsmeßkopf (12) zur Generierung eines wegabhängigen Abstandssignals eingerichtet ist, das dem Abstand des Abstandsmeßkopfes (12) zur betreffenden Fahrfläche (14) entspricht, dass ein Summiermodul (31) vorgesehen ist, in dem das Positionsänderungssignal und das Abstandssignal zu einem Summenabstandssignal verknüpfbar sind, und dass dem Summiermodul (31) ein Fouriertransformationsmodul (32) nachgeordnet ist, mit dem die Fourierkomponenten des Summenabstandssignals bestimmbar sind.

2. Vorrichtung nach Anspruch 1, dadurch gekennzeichnet, dass eine Horizontalverstelleinheit (9) vorgesehen ist, mit der der Abstandsmeßkopf (12) quer zu den Schienen (5, 6) verschiebbar ist.

3. Vorrichtung nach Anspruch 2, dadurch gekennzeichnet, dass eine Spurmeßeinheit (18) vorgesehen ist, mit der der Abstandsmeßkopf (12) so ausrichtbar ist, dass die Strahlung (15) im wesentlichen mittig auf die betreffende Fahrfläche (14) trifft.

4. Vorrichtung nach einem der Ansprüche 1 bis 3, dadurch gekennzeichnet, dass eine Vertikalverstelleinheit (11) vorgesehen ist, mit der der Abstandsmeßkopf (12) senkrecht zu der betreffenden Fahrfläche (14) verschiebbar ist.

5. Vorrichtung nach Anspruch 4, dadurch gekennzeichnet, dass ein Regelmodul (22) vorgesehen ist, mit dem der Abstandsmeßkopf (12) wenigstens innerhalb einer Variationsbreite um einen Sollabstand von der Fahrfläche (14) positionierbar ist.

6. Vorrichtung nach einem der Ansprüche 1 bis 5, dadurch gekennzeichnet, dass dem Fouriertransformationsmodul (32) das Positionsänderungssignal direkt einspeisbar ist.

7. Vorrichtung nach einem der Ansprüche 1 bis 6, dadurch gekennzeichnet, dass dem Fouriertransformationsmodul (32) das Abstandssignal direkt einspeisbar ist.
